(19) Europäisches Patentamt
European Patent Office
Office européen des brevets

(11) EP 4 657 891 A1

(12) EUROPÄISCHE PATENTANMELDUNG

(43) Veröffentlichungstag:
03.12.2025  Patentblatt 2025/49

(21) Anmeldenummer: 25165985.0

(22) Anmeldetag: 25.03.2025

(51) Internationale Patentklassifikation (IPC):
*H04R 25/00* (2006.01)   *G10L 21/02* (2013.01)
*G10L 25/63* (2013.01)

(52) Gemeinsame Patentklassifikation (CPC):
**H04R 25/505; G10L 21/02;** G10L 25/63;
H04R 25/70; H04R 2225/41; H04R 2225/43;
H04R 2430/03

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität:  31.05.2024  DE 102024205064

(71) Anmelder: Sivantos Pte. Ltd.
Singapore 539775 (SG)

(72) Erfinder:
• **PISCHEL, Judith**
**91058 Erlangen (DE)**
• **PISCHEL, Claudia**
**91058 Erlangen (DE)**
• **BRIEGLEB-SCHMIDT, Alexander**
**91058 Erlangen (DE)**

(74) Vertreter: **FDST Patentanwälte**
**Nordostpark 16**
**90411 Nürnberg (DE)**

(54) **VERFAHREN ZUM BETREIBEN EINES HÖRGERÄTS**

(57)     Die Erfindung betrifft ein Verfahren zum Betreiben eines Hörgeräts (2), aufweisend eine Empfangseinheit (4) zum Empfangen von Sprachinformationen und Wandeln in ein Sprachsignal (S), eine Signalverarbeitungseinheit (12) zur Signalverarbeitung des Sprachsignals (S) und Erzeugung eines Ausgangssignals (A), und eine Ausgabeeinheit (18) zur Ausgabe eines Ausgangssignals (A) an einen Hörgerätenutzer, wobei eine Sprachinformation in ein Sprachsignal (S) gewandelt wird, wobei das Sprachsignal (S) durch die Signalverarbeitungseinheit (12) zu einem Ausgangssignal (A) zur Ausgabe an den Hörgerätenutzer verarbeitet wird, wobei aus dem Sprachsignal (S) und dem Ausgangssignal (A) jeweils mindestens ein emotionskorreliertes Merkmal ($F_1$, ..., $F_{18}$, $F_1'$, ..., $F_{18}'$) bestimmt wird, wobei die aus dem Sprachsignal (S) und dem Ausgangssignal (A) bestimmten emotionskorrelierten Merkmale ($F_1$, ..., $F_{18}$, $F_1'$, ..., $F_{18}'$) miteinander verglichen und ein Vergleichsergebnis bestimmt wird, und wobei die Signalverarbeitungseinheit (12) in Abhängigkeit des Vergleichsergebnisses eingestellt wird.

Figur

EP 4 657 891 A1

**Beschreibung**

Die Erfindung betrifft ein Verfahren zum Betreiben eines Hörgeräts. Die Erfindung betrifft weiterhin ein Hörgerät zur Durchführung des Verfahrens.

Als Hörgerät wird allgemein ein elektronisches Gerät bezeichnet, dass das Hörvermögen einer das Hörgerät tragenden Person unterstützt. Insbesondere bezieht sich die Erfindung auf ein Hörgerät, das dazu eingerichtet ist, einen Hörverlust eines hörgeschädigten Nutzers ganz oder teilweise zu kompensieren. Ein solches Hörgerät wird auch als "Hörhilfegerät" (engl.: Hearing Aid, HA) bezeichnet. Daneben gibt es Hörgeräte, die das Hörvermögen von normalhörenden Nutzern schützen oder verbessern, zum Beispiel in komplexen Hörsituationen ein verbessertes Sprachverständnis ermöglichen sollen. Solche Geräte werden auch als "Personal Sound Amplification Products" (kurz: PSAP) bezeichnet. Schließlich fallen unter den Begriff "Hörgerät" in dem hier verwendeten Sinn auch auf oder in dem Ohr getragene Kopfhörer (drahtgebunden oder drahtlos sowie mit oder ohne aktiver Störschallunterdrückung), Headsets, etc. sowie implantierbare Hörgeräte, wie beispielsweise Cochlea-Implantate. Ein Hörgerät kann auch Teil eines AR-Systems (AR: Augmented Reality) oder VR-Systems (VR: Virtual Reality) sein, um die akustischen Informationen einer virtuellen Schallquelle an den Benutzer auszugeben.

Hörgeräte im Allgemeinen, und Hörhilfegeräte im Speziellen, sind meist dazu ausgebildet, am Kopf und hier insbesondere in oder an einem Ohr des Nutzers getragen zu werden, insbesondere als Hinter-dem-Ohr-Geräte (engl.: behind the ear, BTE) oder In-dem-Ohr-Geräte (engl.: in the ear, ITE). Im Hinblick auf ihre in-terne Struktur weisen Hörgeräte regelmäßig mindestens einen Ausgangswandler auf, der ein zum Zweck der Ausgabe zugeführtes Ausgangs-Audiosignal in ein für den Nutzer als Schall wahrnehmbares Signal umwandelt, und letzteres an den Nutzer ausgibt.

In den meisten Fällen ist der Ausgangswandler als elektro-akustischer Wandler ausgebildet, der das (elektrische) Ausgangs-Audiosignal in einen Luftschall umwandelt, wobei dieser ausgegebene Luftschall in den Gehörgang des Nutzers abgegeben wird. Bei einem hinter dem Ohr getragenen Hörgerät ist der auch als "Hörer" ("Receiver") bezeichnete Ausgangswandler meist außerhalb des Ohrs in einem Gehäuse des Hörgerät integriert. Der von dem Ausgangswandler ausgegebene Schall wird in diesem Fall mittels eines Schallschlauchs in den Gehörgang des Nutzers geleitet. Alternativ hierzu kann der Ausgangswandler auch in dem Gehörgang, und somit außerhalb des hinter dem Ohr getragenen Gehäuses, angeordnet sein. Solche Hörgeräte werden nach der englischen Bezeichnung "Receiver In Channel" auch als RIC-Geräte bezeichnet. Im Ohr getragene Hörgeräte, welche so klein dimensioniert sind, dass sie nach außen über den Gehörgang nicht hinausstehen, werden (nach dem englischen Begriff "Comple-tely in Canal") auch als CIC-Geräte bezeichnet.

In weiteren Bauformen kann der Ausgangswandler auch als elektro-mechanischer Wandler ausgebildet sein, der das Ausgangs-Audiosignal in Körperschall (Vibrationen) umwandelt, wobei dieser Körperschall zum Beispiel in den Schädelknochen des Nutzers abgegeben wird. Ferner gibt es implantierbare Hörgeräte, insbesondere Cochlear-Implantate, und Hörgeräte, deren Ausgangs-wandler den Hörnerv des Nutzers direkt stimulieren.

Zusätzlich zu dem Ausgangswandler weist ein Hörgerät häufig mindestens einen (akusto-elektrischen) Eingangswandler auf. Im Betrieb des Hörgeräts nimmt der oder jeder Eingangswandler einen Luftschall aus der Umgebung des Hörgeräts auf, und wandelt diesen Luftschall in ein Eingangs-Audiosignal (d.h. ein elektrisches Signal, das eine Information über den Umgebungsschall transportiert) um. Dieses - auch als "aufgenommenes Schallsignal" bezeichnete - Eingangs-Audiosignal wird regelmäßig in ursprünglicher oder verarbeiteter Form an den Nutzer selbst ausgegeben, z.B. zur Realisierung eines sogenannten Transparenzmodus bei einem Kopfhörer, zur aktiven Störschallunterdrückung oder - z.B. bei einem Hörhilfegerät - zur Erzielung einer verbesserten Geräuschwahrnehmung des Nutzers.

Zudem weist ein Hörgerät häufig eine Signalverarbeitungseinheit (Signalprozessor) auf. In der Signalverarbeitungseinheit wird das oder jedes Eingangs-Audiosignal verarbeitet (d. h. hinsichtlich seiner Schallinformation modifiziert). Die Signalverarbeitungseinheit gibt dabei ein entsprechend verarbeitetes Audiosignal (auch als "Ausgangs-Audiosignal" oder "modifiziertes Schallsignal" bezeichnet) an den Ausgangswandler und/oder an ein externes Gerät aus.

Hörgeräte bieten verschiedene zusätzliche (Hör-/Hörgeräte-)Funktionen, zum Beispiel im Bereich der Signalverarbeitung, welche einen Hörnutzen für einen Hörgerätenutzer (engl.: Hearing Aid Wearer, HAW) verbessern können. Beispiele für solche Funktionen könnten sein: Erkennung der eigenen Stimme (engl.: Own Voice Detection, OVD), Spracherkennung oder Sprachaktivitätserkennung (engl.: Voice Activity Detection, VAD), Aktive Störgeräuschunterdrückung (engl.: Active Noise Reduction, ANR), Aktive Okklusionsunterdrückung (engl.: Active Occlusion Reduction, AOR); Streaming von Audioinformationen (z.B. Musik), Erkennung von unterschiedlichen Körpersignalen (z.B. Fitness); Erkennung von bestimmten Ereignissen und Reaktionen darauf (z.B. Sturzerkennung - wenn ein Benutzer hinfällt, wird ein Alarmgesendet), usw. Derartige Funktionen sind hierbei häufig als Software oder Verarbeitungsalgorithmen der Signalverarbeitungseinheit ausgeführt.

In der Anwendung von Hörsystem beziehungsweise Hörgeräten stellt die Handhabung von Gesprächssituationen eines der Kernprobleme dar. Dies liegt zunächst einmal an dem Umstand, dass dem Benutzer eines Hörsystems wichtige Informationen oftmals im persönlichen Gespräch vermittelt werden. Eine wichtige Information ist hierbei auch die Emotionen des Gesprächspartners.

Wie beispielsweise aus B. W. Schuller, "Speech emotion recognition: two decades in a nutshell, benchmarks and ongoing trends", Communications oft he ACM, Volume 61, Issue 5, pp 90-99 bekannt ist, können Emotionen des Sprechers in Sprachsignalen erkannt und klassifiziert werden. Es gibt beispielsweise mehrere relevante akustische Merkmale, die aus dem Sprachsignal extrahiert werden können. Weiterhin können auch textliche Inhalte oder emotionale Schlüsselwörter zur Unterstützung der akustischen (Emotions-)Analyse verwendet werden.

Um die Muster des stimmlichen Ausdrucks verschiedener Emotionen und anderer affektiver Dispositionen und Prozesse zu verstehen, ist es möglich, akustische Parameter aus dem Sprachsignal zu extrahieren. Die zugrundeliegende theoretische Annahme ist hierbei, dass affektive Prozesse die autonome Erregung und die Spannung der Striatusmuskulatur unterschiedlich verändern und dadurch die Stimme und die Sprachproduktion auf der phonatorischen und artikulatorischen Ebene beeinflussen, so dass diese Veränderungen durch verschiedene Parameter der akustischen Wellenform abgeschätzt werden können.

Im Betrieb des Hörgeräts arbeiten eine Vielzahl von Algorithmen zur Signalprogrammierung, um den Hörverlust zu kompensieren, aber auch um zusätzliche unterstützende Algorithmen für bestes Sprachverstehen und/oder komfortables Hören bereitzustellen. All diese Manipulationen des ursprünglichen Eingangssignals können die akustischen Merkmale beeinflussen, welche für die Emotionserkennung wichtig sind. Die Kompensation eines Hörverlusts durch ein Hörgerät kann also mit einer Verschlechterung der Emotionserkennung einhergehen. Infolgedessen stehen dem Hörgeräteträger in einer Gesprächssituation möglicherweise nicht alle Signalinformationen zur Verfügung, die er für eine Emotionserkennung benötigt.

Der Erfindung liegt die Aufgabe zugrunde, ein besonders geeignetes Verfahren zum Betreiben eines Hörgeräts anzugeben. Insbesondere soll eine hinsichtlich der Emotionserkennung verbesserte Sprachverständlichkeit in Gesprächssituationen bereitgestellt werden. Der Erfindung liegt weiterhin die Aufgabe zugrunde, ein besonders geeignetes Hörgerät zur Durchführung des Verfahrens anzugeben.

Hinsichtlich des Verfahrens wird die Aufgabe mit den Merkmalen des Anspruchs 1 und hinsichtlich des Hörgeräts mit den Merkmalen des Anspruchs 6 erfindungsgemäß gelöst. Vorteilhafte Ausgestaltungen und Weiterbildungen sind Gegenstand der abhängigen Ansprüche (Unteransprüche).

Die im Hinblick auf das Verfahren angeführten Vorteile und Ausgestaltungen sind sinngemäß auch auf das Hörgerät übertragbar und umgekehrt. Sofern nachfolgend Verfahrensschritte beschrieben werden, ergeben sich vorteilhafte Ausgestaltungen für das Hörgerät insbesondere dadurch, dass dieses ausgebildet ist, einen oder mehrere dieser Verfahrensschritte auszuführen.

Das erfindungsgemäße Verfahren ist dazu vorgesehen und ausgestaltet ein Hörgerät zu betreiben. Das Hörgerät ist hierbei dazu konfiguriert um an oder in einem Ohr eines Hörgerätenutzers (Hörgeräteträger) getragen zu werden, wobei das Verfahren hierbei insbesondere durchgeführt wird, wenn das Hörgerät an oder in einem Ohr des Hörgerätenutzers getragen wird. Bei dem Hörgerät handelt es sich insbesondere um ein Hörhilfegerät, welches dazu vorgesehen und eingerichtet ist, einen Hörverlust des Hörgerätenutzers zu kompensieren, insbesondere signaltechnisch zu kompensieren.

Das Hörgerät weist hierbei eine Empfangseinheit zum Empfangen von Sprachinformationen und Wandeln in ein Sprachsignal auf. Das Hörgerät weist weiterhin eine Signalverarbeitungseinheit zur signaltechnischen Verarbeitung (Signalverarbeitung) des Sprachsignals auf. Die Signalverarbeitungseinheit wandelt das Sprachsignal hierbei in ein Ausgangssignal (Ausgangs-Audiosignal, verarbeitetes Signal), wobei das Ausgangssignals mittels einer Ausgabeeinheit an einen Hörgerätenutzer ausgebbar ist.

Unter einem "Sprachsignal" ist hier und im Folgenden insbesondere ein akustisches oder elektrisches Signal zu verstehen, welches in der Lage ist, mündliche oder gesprochene (Sprach-)Informationen zu übertragen, zu speichern oder zu verarbeiten. Ein solches Sprachsignal enthält insbesondere Informationen, die von der menschlichen Stimme erzeugt werden und Worte, Sätze, Töne oder andere vokale Äußerungen umfassen kann. Ein Sprachsignal kann in verschiedenen Formen vorliegen, darunter analoge Schallwellen, digitale Audiodaten oder andere elektrische Signale, die Sprachinformationen kodieren oder übertragen.

Die Empfangseinheit weist beispielsweise einen akusto-elektrischer Wandler auf, welcher akustische Schallsignale aus einer Umgebung aufnimmt und in ein digitales Eingangssignal wandelt. Vorzugsweise ist der Wandler hierbei als ein Mikrofon ausgebildet. Zusätzlich oder alternativ kann die Empfangseinheit beispielsweise einen Transceiver (RF-Receiver, T-Coil, ...) zum Empfang von drahtlosen Funksignalen aufweisen, und hieraus ein entsprechendes Eingangssignal erzeugen.

Das insbesondere digitale oder elektrische Sprachsignal ist hierbei in der Regel ein Teil des empfangenen Eingangssignals (Eingangs-Audiosignals). Beispielsweise weist die Empfangseinheit hierbei eine Sprachaktivitätserkennung (engl.: Voice Activity Detection, VAD) auf, um das Sprachsignal vom restlichen Eingangssignal zu trennen oder zu separieren. Unter einer Sprachaktivitätserkennung ist hierbei insbesondere die (signaltechnische) Erkennung des Vorhandenseins oder Nichtvorhandenseins von menschlicher Sprache zu verstehen. Mit anderen Worten ist das Sprachsignal vorzugsweise das von einer Sprachaktivitätserkennung ausgegebene (digitale oder elektrische) Signal.

Die Sprachaktivitätserkennung kann beispielsweise Teil des Empfangseinheit sein. Vorzugsweise ist die Sprachaktivitätserkennung jedoch Teil der Signalverarbeitungseinheit, wobei die Empfangseinheit aus den Sprachinformationen ein Eingangssignal erzeugt, welches das Sprachsignal und ein Restsignal umfasst, wobei das Sprachsignal erst im Zuge der Signalverarbeitung isoliert oder separiert wird.

Die Ausgabe des Ausgangssignals ist insbesondere ein Audio- oder Schallsignal sein, welches von einem elektro-akustischen Wandler (Lautsprecher) als Ausgabeeinheit erzeugt wird. Die Ausgabeeinheit wandelt das elektrische Ausgangssignal also in ein akustisches Audio- oder Schallsignal.

Verfahrensgemäß werden Sprachinformationen empfangen und in ein Sprachsignal gewandelt. Das Sprachsignal geht hierbei beispielsweise auf eine Sprachäußerung zurück, welche von einem Sprecher in der Nähe des Hörgerätenutzers gesprochen, und von der Empfangseinheit des Hörgeräts erfasst wird. Alternativ kann die Äußerung auch von einem Funksignal, beispielsweise einem Bluetooth-Signal oder einem Mobilfunknetz-Signal, kommen (z. B. Medien-Streaming oder Telefongespräche), welches über ein externes Zusatzgerät, wie beispielsweise einem Smartphone an die Empfangseinheit übertragen wird.

Das Sprachsignal wird hierbei durch die Signalverarbeitungseinheit zu dem Ausgangssignal gewandelt oder verarbeitet. Mit anderen Worten wird das Sprachsignal durch eine Signalverarbeitung der Signalverarbeitungseinheit modifiziert oder verändert. Unter einer "Signalverarbeitung" ist hier und im Folgenden insbesondere eine Umwandlung, Manipulation oder Analyse des Sprachsignals mittels digitaler oder analoger Techniken zu verstehen, so dass die Sprache beziehungsweise die Sprachinformationen (beziehungsweise deren akustische Informationen) in dem Ausgangssignal für den Hörgerätenutzer verständlich sind. Die Signalverarbeitung umfasst unter anderem die Filterung (engl.: filtering), Verstärkung (engl.: amplification), Modulation (engl.: modulation) und Demodulation (engl.: demodulation) des Sprachsignals beziehungsweise der darin enthaltenen Sprachinformationen.

Verfahrensgemäß wird anschließend aus dem Sprachsignal und dem Ausgangssignal jeweils mindestens ein emotionskorreliertes Merkmal bestimmt. Mit anderen Worten wird aus dem ursprünglichen (nicht-verarbeiteten) Sprachsignal und dem signaltechnisch verarbeiteten Sprachsignal (Ausgangssignal) jeweils mindestens ein emotionskorreliertes Merkmal bestimmt.

Unter einem "emotionskorrelierten Merkmal" ist hier und im Folgenden insbesondere eine messbarer oder erfassbarer Eigenschaft oder Parameter zu verstehen, welcher in einem Zusammenhang mit einer emotionalen Verfassung des Sprechers, also der Quelle der Sprachinformationen, steht beziehungsweise mit einer solchen Verfassung korreliert ist. Das emotionskorrelierte Merkmal kann beispielsweise eine Stimmlage- oder Stimmfrequenz sein. Das emotionskorrelierte Merkmal wird beispielsweise anhand einer zeitlichen, spektro-temporalen Analyse, des Sprachsignals oder Ausgangssignals bestimmt.

Das emotionskorrelierte Merkmal ist insbesondere ein GeMAPS-Merkmal (GeMAPS: Geneva Minimalistic Acoustic Parameter Set) oder -Parameter, wie er in F. Eyben et. al, "The Geneva Minimalistic Acoustic Parameter Set (GeMAPS) for Voice Research and Affective Computing", in IEEE Trans. Affective Computing, Vol. 7(2), Juli 2015 beschrieben ist.

Das emotionskorrelierte Merkmal ist beispielsweise eine Tonhöhenfrequenz (pitch frequency), ein Jitter (d. h. eine Abweichung von der Tonhöhenfrequenz), eine Frequenz des ersten Formanten, eine Frequenz des zweiten Formanten, eine Frequenz des dritten Formanten, eine Bandbreite des 1. Formanten (Formantbereich, Formantstrecke), eine Differenz der Spitzenamplituden von aufeinanderfolgenden Tonhöhenfrequenz -Perioden, eine Lautheit im Gehörspektrum, ein Oberton-Rausch-Verhältnis, eine Summierte Energie zwischen 50 Hz (Hertz) bis 1000 Hz, eine summierte Energie zwischen 1 kHz (Kilohertz) bis 5 kHz, ein Verhältnis zwischen der stärksten Leistungsspitze zwischen 0 kHz bis 2 kHz und 2 kHz bis 5 kHz, eine spektrale Steigung innerhalb 0 Hz bis 500 Hz, eine spektrale Steigung im Bereich 500 Hz bis 1500 Hz, eine relative Energie zwischen ersten, zweiten und dritten Formant, ein Leistungsverhältnis zwischen der Spitze der Spektralharmonischen im ersten, zweiten und dritten Formanten und der Leistung der Spektralspitze bei der Tonhöhenfrequenz, ein Leistungsverhältnis zwischen der Tonhöhenfrequenz und dem zweiten Vielfachen der Tonhöhenfrequenz, ein Leistungsverhältnis zwischen der Tonhöhenfrequenz und der höchsten Oberwelle im dritten Formantenbereich.

In dem Sprachsignal und dem Ausgangssignal wird hierbei insbesondere jeweils der gleiche Parameter als emotionskorreliertes Merkmal bestimmt, so dass die bestimmten Merkmale des Sprachsignals und des Ausgangssignals miteinander vergleichbar sind. In einem nächsten Verfahrensschritt werden die aus dem Sprachsignal und dem Ausgangssignal bestimmten emotionskorrelierten Merkmale miteinander verglichen, und anhand des Vergleichs ein Vergleichsergebnis bestimmt. Durch den Vergleich mit dem unverarbeiteten Sprachsignal ist es anhand des Vergleichsergebnisses möglich, zu beurteilen, inwieweit die emotionskorrelierten Merkmale oder Informationen des Sprachsignals durch die Signalverarbeitung im Ausgangssignal verändert wurden.

Erfindungsgemäß wird die Signalverarbeitungseinheit beziehungsweise deren Signalverarbeitung in Abhängigkeit des Vergleichsergebnisses eingestellt. Gemäß dem erfindungsgemäßen Verfahren wird die Summe der Hörgeräte-Algorithmen so gesteuert und/oder geregelt, dass die für die Emotionserkennung relevanten akustischen Merkmale nicht beschädigt (oder sogar verbessert) werden, so dass der Hörgerätenutzer in der Lage ist, Emotionen aus verarbeiteten Sprachsignal (also in dem ausgegebenen Ausgangssignal) zu erkennen. Die Erfindung zielt somit darauf ab, das Eingangs- beziehungsweise das Sprachsignal hinsichtlich seiner für die Emotionserkennung relevanten akustischen Merkmale zu analysieren, und die Wirkung jedes einzelnen und aller Algorithmen der Signalverarbeitung derart zu kontrollieren oder zu begrenzen, dass sichergestellt wird, dass die akustischen Merkmale für die Emotionserkennung möglichst vollständig erhalten bleiben.

Verfahrensgemäß erfolgt die Signalverarbeitung des Sprachsignals somit sowohl hinsichtlich einer verbesserten Sprachwahrnehmung unter gleichzeitiger (nummerischer) Erhaltung der in den Sprachinformationen enthaltenen emotionskorrelierten Merkmale. Im Gegensatz zu bisherigen Signalverarbeitungen liegt somit ein Fokus auf den Emotionen des Gesprächspartners und deren Informationserhalt.

Hierbei ist es beispielsweise möglich, dass eine Anzahl von emotionskorrelierten Merkmalen, also mehrere, mindestens zwei emotionskorrelierte Merkmale, aus den Signalen bestimmt werden. Welche Parameter oder Merkmale hierbei konkret bestimmt werden, ist dabei zunächst nebensächlich. Hierbei ist es beispielsweise denkbar, dass für unterschiedliche Signalverarbeitungen des Sprachsignals unterschiedliche emotionskorrelierte Merkmale bestimmt und miteinander verglichen werden. Welche emotionskorrelierten Merkmale durch welche Signalverarbeitungen beeinflusst werden lässt sich beispielsweise aus vergangenen Sprachdaten oder aus entsprechenden Versuchen oder Erprobungen ermitteln. Für unterschiedliche Hörsituationen und Umgebungsbedingungen oder Anwendungsszenarien ergeben sich unter Umständen unterschiedliche relevante emotionskorrelierte Merkmale (beispielsweise Gesprächssituation in lauter oder leiser Umgebung, Gesprächssituationen in Filmen, ...).

Vorzugsweise ist das Set an Parametern oder Merkmalen stets gleich, unabhängig von der Sprachäußerung. Verschiedene Ausprägungen der akustischen Merkmale charakterisieren hierbei die Emotionen. Bei einem gegebenen Sprachsignal und eingeschalteter Signalverarbeitung (z.B. Entrauschung) wird eine andere Merkmalsausprägung erwartet, als wenn keine Signalverarbeitung eingeschaltet ist. Durch Vergleich der Merkmale kann somit die Veränderung als Indikator herangezogen werden, um die Signalverarbeitung anzupassen.

Beispielsweise könnte mit eingeschalteter Entrauschung (Rauschreduzierung) der Fall eintreten, dass ein Merkmal, welches Informationen aus einem bestimmten Frequenzband extrahiert, eine geringere Ausprägung aufweist als ohne Entrauschung. In einem solchen Fall kann davon ausgegangen werden, dass der Entrauschalgorithmus im betrachteten Frequenzbereich zu "aggressiv" eingestellt ist. Erfindungsgemäß wird in einem solchen Fall die Entrauschung "defensiver" eingestellt. Insbesondere wird die Entrauschung derart eingestellt, dass die Entrauschung (noch) akzeptabel funktioniert und das Emotionsmerkmal weiterhin ausgeprägt ist. Ein solcher Trade-Off zwischen Erhaltung der Emotionsmerkmale und Sprachverständlichkeit kann situationsabhängig sein, beispielsweise wenn der Hörgeräteträger an einem Bahnsteig steht und die Lautsprecherdurchsage hören möchte, sind erhaltene Emotionen im Hörgerätesignal weniger wichtig und der Fokus liegt hauptsächlich oder ausschließlich auf der Sprachverständlichkeit.

Es ist also beispielsweise denkbar, dass eine akustische Umgebungssituation erfasst und mittels eines entsprechenden Klassifikators klassifiziert wird, wobei anhand der klassifizierten Umgebungssituation eine Gewichtung zwischen einem Erhalt der Emotionsmerkmale und einer Sprachverständlichkeit vorgenommen wird. Weiterhin ist denkbar, dass durch die Signalverarbeitung abgeschwächte Emotionsmerkmale wieder künstlich zum Ausgabesignal hinzugefügt werden.

In einer vorteilhaften Ausführung wird das Vergleichsergebnis mit einem mindestens einem hinterlegten Schwellwert verglichen, und die Signalverarbeitung in Abhängigkeit des Schwellwertvergleichs eingestellt. Das Sprachsignal wird also hinsichtlich seiner für die Emotionserkennung relevanten akustischen Merkmale analysiert, wobei Schwellenwerte oder Regeln dafür festlegt sind, wie die emotionskorrelierten Merkmale durch die Signalverarbeitung, also die Summe der Algorithmen, verändert werden dürfen, dass die Wirkung jedes einzelnen und aller Signalverarbeitungen kontrolliert und begrenzt wird. Dadurch wird gewährleistet die akustischen Merkmale und Informationen im Ausgangssignal weitestmöglich erhalten bleiben.

Für unterschiedliche emotionskorrelierte Merkmale sind unterschiedliche Schwellwerte möglich. Weiterhin können unterschiedlichen Signalverarbeitungen, beispielsweise unterschiedlichen Algorithmen, unterschiedliche Schwellwerte zugeordnet sein, so dass lediglich diejenigen Signalverarbeitungen der Signalverarbeitungseinheit eingestellt oder verändert werden, bei welchen der Schwellwertvergleich ein entsprechendes Vergleichsergebnis liefert. Dadurch ist eine besonders effektive und gezielte (Nach-)Justierung oder Einstellung der Signalverarbeitungseinheit realisierbar.

In einer denkbaren Ausgestaltung wird als Vergleichsergebnis beispielsweise eine Abweichung (Abweichungsmaß) zwischen den emotionskorrelierten Merkmalen des Sprachsignals und des Ausgangssignals bestimmt. Das Vergleichsergebnis beziehungsweise die Abweichung kann hierbei beispielsweise das Quadrat eines euklidischen Abstands der Form

$$\gamma = \sum_{i=1}^{j} |F_i - F'_i|^2$$

verwendet werden, wobei $\gamma$ das Vergleichsergebnis oder die Abweichung, F das emotionskorrelierte Merkmal des Sprachsignals, F' das emotionskorrelierte Merkmal des Ausgangssignals, i ein Laufindex und j die Anzahl der verwendeten/relevanten Merkmale ist. Bei einer Anzahl von emotionskorrelierten Merkmalen bilden die Merkmale somit einen Merkmalsvektor, wobei das Vergleichsergebnis beispielsweise das Quadrat einer euklidischen Norm (squared euclidean norm) zwischen den Merkmalsvektoren des Sprachsignal und des Ausgangssignal ist.

Werden als emotionskorrelierte beispielsweise GeMAPS-Parameter verwendet, so ist j beispielsweise gleich achtzehn (18), wenn alle achtzehn GeMAPS-Parameter zur Untersuchung oder Beurteilung der Abweichung verwendet. Mit anderen Worten werden beispielsweise Merkmalsvektoren mit achtzehn Einträgen für das Sprachsignal und das Ausgangssignal erstellt.

Vorzugsweise wird die Signalverarbeitung hierbei derart eingestellt, dass die Abweichung minimiert wird. Mit anderen Worten wird das oder jedes emotionskorrelierte Merkmal in dem Ausgangssignal weitestgehend an das korrespondierende emotionskorrelierte Merkmal des Sprachsignals angepasst. Dadurch wird sichergestellt, dass die Informationen über die Emotionen des Sprechers nicht oder lediglich minimal verfälscht werden. Mit anderen Worten wird ein Ausgangssignal erzeugt, welches hinsichtlich der enthaltenen Emotions-Informationen im Wesentlichen dem Sprachsignal entspricht.

Die vorstehende Formel stell eine generische Methode zur Berechnung der Abweichung dar. Basierend auf der jeweiligen Anwendung, kann das Abstandsmaß geändert werden. beispielsweise ist es denkbar die Formel durch die Einführung von Gewichtungsfaktoren zu ergänzen, um so einige Merkmale höher zu gewichten als andere. Dieses Vorgehen macht insbesondere dann Sinn, wenn das Ziel der Anwendung der Erhalt einer bestimmten Emotion, z.B. Wut, ist. In diesem Beispiel würde man die Merkmale die "Wut" charakterisieren stärker gewichten, und so bei der Minimierung des Abstandes besonderen Wert auf diese Merkmale, und damit den Erhalt dieser Emotion, legen.

In einer zusätzlichen oder alternativen Ausführung wird die Signalverarbeitung anhand des Vergleichsergebnisses derart eingestellt, dass das mindestens eine emotionskorrelierte Merkmal im Ausgangssignal verstärkt wird. Das Verfahren wird in dieser Ausführung also dazu verwendet, um akustische Merkmale für die Emotionserkennung nicht lediglich im Ausgangssignal zu erhalten, sondern auch zu verbessern, also gegenüber dem Sprachsignal zu verstärken. Dadurch wird eine Emotionserkennung für den Hörgerätenutzer verbessert, was insbesondere für Hörgerätenutzer vorteilhaft ist, deren Fähigkeit, Emotionen zu erkennen, z. B. aufgrund eines Hörverlusts beeinträchtigt ist.

Um sicherzustellen, dass Emotitions-Informationen verstärkt und nicht künstlich verfälscht werden, also um zu gewährleisten, dass durch die Verstärkung lediglich Emotionen hervorgehoben werden, welche auch in den ursprünglichen Sprachinformationen enthalten sind, wird vorab geprüft ob das Sprachsignal Emotionsinformationen enthält.

Beispielsweise wird das Sprachsignal mit einem probabilistischen Modell untersucht, welches für jede Emotion einen Wahrscheinlichkeitswert ausgibt, ob die Emotion im Sprachsignal vorhanden ist oder nicht. Eine Verstärkung einer Emotion oder eines emotionskorrelierten Merkmals wird insbesondere dann durchgeführt, wenn die Wahrscheinlichkeit einer Emotion oberhalb eines hinterlegten Schwellwerts liegt. Wie hoch der Schwellwert ist, ist dabei zunächst nebensächlich. Dies lässt sich beispielsweise aus vergangenen Gesprächsdaten oder aus entsprechenden Versuchen oder Erprobungen ermitteln. Ein solches probabilistisches Modell ist einfach herleitbar. Beispielsweise kann bei einer geeigneten Wahl des Emotionsklassifikationsalgorithmus der Abstand des betrachteten Samples zur Entscheidungsgrenze als Wahrscheinlichkeit herangezogen werden.

Beispielsweise werden im Zuge des Vergleichs die euklidischen Normen der bestimmten Merkmalsvektoren für das Sprachsignal mit dem Ausgangssignal verglichen, und die Signalverarbeitung der Signalverarbeitungseinheit eingestellt, wenn eine Bedingung der Form

$$\sqrt{F_1^2 + F_2^2 + \cdots + F_j^2} \geq \sqrt{F_1'^2 + F_2'^2 + \cdots + F_j'^2}$$

erfüllt ist, wobei F das emotionskorrelierte Merkmal des Sprachsignals, F' das emotionskorrelierte Merkmal des Ausgangssignals, i ein Laufindex und j die Anzahl der verwendeten/relevanten Merkmale ist. Im Zuge des Vergleichs werden also die Länge der Merkmalsvektoren miteinander verglichen, wobei das Vergleichsergebnis angibt, welcher Merkmalsvektor länger ist, also welches Signal den größeren Informationsgehalt hinsichtlich Emotionen-Informationen aufweist. Hierbei wird die Signalverarbeitung eingestellt, wenn der Merkmalsvektor des Ausgangssignals kleiner oder gleich dem Merkmalsvektor des Sprachsignals ist.

Prinzipiell besteht hierbei das Problem, dass bei einer solchen "live" Modifikation des emotionalen Inhalts einer Sprachäußerung die Referenz fehlt (das klar Sprachsignal). Für einen Vergleich gemäß der vorstehenden Formel wird beispielsweise geschätzt, ob das analysierte aufgenommene Signal eine Emotion trägt und ab einer gewissen Sicherheit die Emotion künstlich herausgearbeitet. Letzteres kann mithilfe von emotions-typischen Prototypfiltern bewerkstelligt werden, welche beispielsweise bestimmte Frequenzbereiche anheben.

Unter "Schätzung" oder "schätzen" ist hier und im Folgenden eine genäherte Bestimmung der im Sprachsignal enthaltenen Emotionsinformationen durch Auswertung des Sprachsignals, beispielsweise durch vorcharakterisierte Messungen, hinterlegten Tabellen oder Kennlinien, oder mittels statistisch-mathematischer Methoden, zu verstehen. Beispielsweise wird mittels eines (robusten) Klassifikators oder Merkmalsextraktors geschätzt, ob das Sprachsignal eine Emotion bzw. ein emotionskorreliertes Merkmal enthält.

In einer zweckmäßigen Weiterbildung wird die Länge des Ausgangssignal-Merkmalsvektor beispielsweise mit einem hinterlegten Skalierungsfaktor $\alpha$ skaliert (wobei $\alpha > 1$), wobei der Skalierungsfaktor derart gewählt ist, dass eine gewünschte Verstärkung der emotionsrelevanten Merkmale im Ausgangssignal bewirkt wird.

Hierbei ist es beispielsweise denkbar, dass in Abhängigkeit einer Hörsituation zwischen dem vorstehend beschriebenen Schwellwertvergleich und der Verstärkung der emotionskorrelierten Merkmale umgeschaltet werden. Beispielsweise wird in einer ruhigen Umgebungssituation mit wenig Hintergrundgeräuschen der Schwellwertvergleich durchgeführt, um die Emotionsinformationen der Sprachinformationen möglichst unverfälscht wiederzugeben, wobei bei einer lauten Umgebungssituation mit vielen Hintergrundgeräuschen beispielsweise die emotionskorrelierten Merkmale verstärkt werden, damit sie vom Hörgerätenutzer einfacher wahrnehmbar sind.

Das erfindungsgemäße Hörgerät ist dazu vorgesehen und eingerichtet, an oder in einem Ohr eines Hörgerätenutzers getragen zu werden. Das Hörgerät ist vorzugsweise weiterhin dazu vorgesehen und eingerichtet, einen Hörverlust des Hörgerätenutzers zu kompensieren. Mit anderen Worten handelt es sich bei dem Hörgerät in dem bevorzugten Anwendungsfall um ein zur Versorgung von Minderhörenden ausgebildetes Hörgerät. Das Hörgerät ist also insbesondere als ein Hörhilfegerät ausgeführt.

Das erfindungsgemäße Hörgerät ist zur Durchführung eines vorstehend beschriebenen Verfahrens vorgesehen sowie dafür geeignet und eingerichtet. Das Hörgerät weist eine Empfangseinheit zum Empfangen von Sprachinformationen und Wandeln in ein Sprachsignal, eine Signalverarbeitungseinheit zum Wandeln eines Sprachsignals in ein Ausgangssignal, eine Ausgabeeinheit zur Ausgabe eines Ausgangssignals an einen Hörgerätenutzer, einen Merkmalsextraktor zur Bestimmung jeweils mindestens eines emotionskorrelierten Merkmals aus dem Sprachsignal und aus dem Ausgangssignal, und einen Controller (also eine Steuereinheit) zur Durchführung des vorstehend beschriebenen Verfahrens auf.

Der Controller ist signaltechnisch zumindest mit der Signalverarbeitungseinheit und mit dem Merkmalsextraktor gekoppelt. Die Signalverarbeitungseinheit und der Merkmalsextraktor können hierbei auch Teil des Controllers sein. Mit anderen Worten können die Funktionalitäten der Signalverarbeitung und Merkmalsextraktion in den Controller programm- und/oder schaltungstechnisch integriert sein.

Hierbei ist der Controller auch direkt mit der Empfangseinheit und mit der Ausgabeeinheit signaltechnisch gekoppelt.

Der Controller ist hierbei allgemein - programm- und/oder schaltungstechnisch - zur Durchführung des vorstehend beschriebenen erfindungsgemäßen Verfahrens eingerichtet. Der Controller ist somit konkret dazu eingerichtet, das Sprachsignal mittels der Empfangseinheit mittels der Signalverarbeitung zu dem Ausgangssignal zu verarbeiten und mittels des Merkmalsextraktors aus dem Sprachsignal und dem Ausgangssignal jeweils mindestens ein emotionskorreliertes Merkmal zu bestimmen. Der Controller ist weiterhin dazu eingerichtet, die bestimmten Merkmale miteinander zu vergleichen, und anhand eines resultierenden Vergleichsergebnisses die Signalverarbeitung einzustellen.

In einer bevorzugten Ausgestaltungsform ist der Controller zumindest im Kern durch einen Mikrocontroller mit einem Prozessor und einem Datenspeicher gebildet, in dem die Funktionalität zur Durchführung des erfindungsgemäßen Verfahrens in Form einer Betriebssoftware (Firmware) programmtechnisch implementiert ist, so dass das Verfahren - gegebenenfalls in Interaktion mit einem Vorrichtungsnutzer - bei Ausführung der Betriebssoftware in dem Mikrocontroller automatisch durchgeführt wird. Der Controller kann im Rahmen der Erfindung alternativ aber auch durch ein nicht-programmierbares elektronisches Bauteil, wie zum Beispiel einem anwendungsspezifischen integrierten Schaltkreis (ASIC) oder durch einem FPGA (Field Programmable Gate Array), gebildet sein, in dem die Funktionalität zur Durchführung des erfindungsgemäßen Verfahrens mit schaltungstechnischen Mitteln implementiert ist.

Das Hörgerät ist hierbei ausgebildet, Schallsignale aus der Umgebung aufzunehmen und an den Hörgerätenutzer auszugeben. Das Hörgerät weist ein (Hör-)Gerätegehäuse auf, in welchem beispielsweise die Empfangseinheit, die Signalverarbeitungseinheit, der Merkmalsextraktor, der Controller, und die Ausgabeeinheit aufgenommen sind. Das Gerätegehäuse ist derart ausgebildet, dass dieses vom Hörgerätenutzer am Kopf und in der Nähe des Ohrs getragen werden kann, z.B. im Ohr, am Ohr oder hinter dem Ohr.

Das Hörgerät weist zumindest einen akusto-elektrischen Eingangswandler, insbesondere ein Mikrofon, auf, welcher Teil der Empfangseinheit ist. Der Eingangswandler nimmt im Betrieb des Hörgeräts Schallsignale (Geräusche, Töne, Sprache, etc.) aus der Umgebung auf, und wandelt diese in ein elektrisches Eingangssignal (Akustikdaten, Eingangs-Audiosignal). Das Hörgerät weist hierbei als Teil der Empfangseinheit weiterhin eine Spracherkennung oder Sprachaktivitätserkennung (VAD), beispielsweise als Teil der Signalverarbeitungseinheit, auf, welche ein Sprachsignal aus dem Eingangssignal beziehungsweise den Akustikdaten erzeugt. Das Hörgerät weist weiterhin insbesondere einen elektro-akustischen Ausgangswandler, beispielsweise in Form eines (Miniatur-)Lautsprechers, auf, um anhand eines von der Signalverarbeitungseinheit erzeugten Audiosignals (Ausgangssignal) ein akustisches Ausgabesignal zu erzeugen. Der Ausgangswandler kann hierbei Teil der Ausgabeeinheit sein.

Das erfindungsgemäße Hörgerät ermöglicht somit Steuerung und/oder Regelung der Summe der Hörgeräte-Algorithmen derart, dass die für die Emotionserkennung relevanten akustischen Merkmale nicht beschädigt (oder sogar verbessert) werden, so dass der Hörgerätenutzer in der Lage ist, Emotionen aus verarbeiteten Sprachsignal (also in dem ausgegebenen Ausgangssignal) zu erkennen.

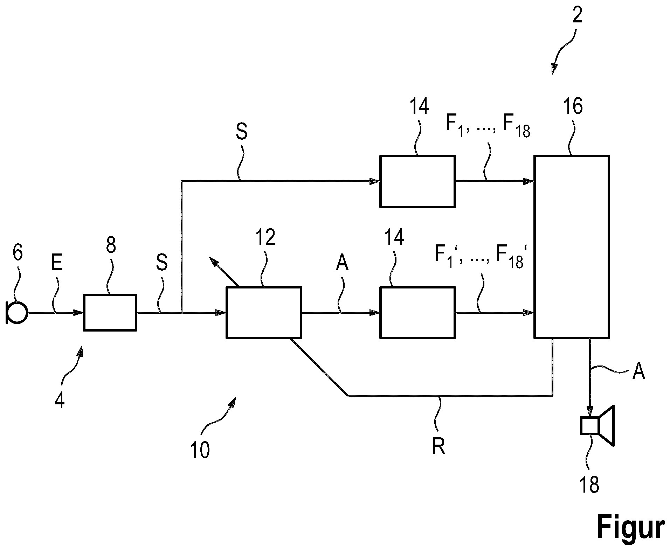

Nachfolgend sind Ausführungsbeispiele der Erfindung anhand einer Zeichnung näher erläutert. Die einzige Figur zeigt hierbei in einer vereinfachten und schematischen Darstellung ein Blockdiagramm für ein Hörgerät.

Die Figur zeigt ein insbesondere als Hörhilfegerät ausgeführtes Hörgerät 2.

Das Hörgerät 2 weist eine Empfangseinheit 4 mit mindestens einem akusto-elektrischen Eingangswandler 6, beispielsweise einem Mikrofon, und mit einer Spracherkennungseinheit 8 (voice activity unit) auf.

Der Eingangswandler 6 nimmt im Betrieb des Hörgeräts 2 Schallsignale (Geräusche, Töne, Sprache, etc.) aus der Umgebung auf, und wandelt diese in ein elektrisches Eingangssignal E. Die Spracherkennungseinheit 8 ist beispielsweise als Teil eines Controllers 10 ausgeführt, und erzeugt im Betrieb ein Sprachsignal S aus dem Eingangssignal E, wenn in den empfangenen Schallsignalen Sprachinformationen enthalten sind.

Das Sprachsignal S wird mittels einer Signalverarbeitungseinheit 12 des Controllers 10 zu einem Ausgangssignal A verarbeitet. Die Signalverarbeitung der Signalverarbeitungseinheit 12 ist hierbei die Summe von Algorithmen zur Modifizierung des Sprachsignals S in das Ausgangssignal A, welche das Sprachverständnis für einen Hörgerätenutzer verbessern sollen, beispielsweise indem ein Hörverlust des Hörgerätenutzers signalverarbeitungstechnisch kompensiert wird.

Das nicht verarbeitete Sprachsignal S und das verarbeitete Sprachsignal, also das Ausgangssignal A, werden jeweils einem Merkmalsextraktor 14, welcher beispielsweise ebenfalls in den Controller 10 integriert ist, zugeführt. Der Merkmalsextraktor 14 bestimmt aus den Sprachsignal A und dem Ausgangssignal A jeweils einen Merkmalsvektor mit einer Anzahl von emotionskorrelierten Merkmalen als Vektoreinträge. Beispielsweise werden Merkmalvektoren mit achtzehn (18) Vektoreinträgen beziehungsweise emotionskorrelierten Merkmalen bestimmt, wobei die Merkmale des Sprachsignals S mit $F_1$, ..., $F_{18}$ und die Merkmale des Ausgangssignals A mit $F_1'$, ..., $F_{18}'$ bezeichnet sind.

Die bestimmten Merkmale $F_1$ bis $F_{18}$ und $F_1'$ bis $F_{18}'$ werden einer Vergleichseinheit 16 des Controllers 10 zugeführt. Die Vergleichseinheit 16 führt einen Merkmalsvergleich der Merkmale $F_1$ bis $F_{18}$ und $F_1'$ bis $F_{18}'$ durch und erzeugt ein Vergleichsergebnis $\gamma$.

In Abhängigkeit des Vergleichsergebnisses $\gamma$ wird entweder ein Steuer- und/oder Regelsignal R erzeugt, mittels welchen die Signalverarbeitung der Signalverarbeitungseinheit 12, insbesondere deren Algorithmen, eingestellt werden, oder das Ausgangssignal A wird an eine Ausgabeeinheit 18 weitergleitet. Die Ausgabeeinheit 18 ist beispielsweise als ein elektro-akustischer Ausgangswandler, beispielsweise in Form eines Miniaturlautsprechers ausgeführt, und wandelt das Ausgangssignal A in ein akustisches Schallsignal für den Hörgerätenutzer.

In einer möglichen Ausführungsform wird als Merkmalsvergleich ein Quadrat eines euklidischen Abstands der Merkmalsvektoren bestimmt. Das Vergleichsergebnis $\gamma$ beziehungsweise die Abweichung zwischen den Merkmalsvektoren ist somit

$$\gamma = \sum_{i=1}^{18} |F_i - F_i'|^2$$

Das Vergleichsergebnis $\gamma$ wird hierbei mit einem hinterlegten Schwellwert verglichen, wobei das Steuer- und/oder Regelsignal R erzeugt wird, wenn das Vergleichsergebnis $\gamma$ höher als der Schwellwert ist, also wenn die Abweichung beziehungsweise der Abstand zwischen den Merkmalsvektoren größer als der Schwellwert ist, und wobei das Ausgangssignal A mittels der Ausgabeeinheit 18 ausgegeben wird, wenn das Vergleichsergebnis $\gamma$ kleiner als der Schwellwert ist, also wenn die Abweichung beziehungsweise der Abstand zwischen den Merkmalsvektoren kleiner als der Schwellwert ist.

Der Schwellenwert ist vorzugsweise auf der Grundlage einer audiologischen Optimierung bestimmt. Der Schwellwert ist insbesondere derart dimensioniert, dass bei einer Unterschreitung des Schwellwerts ein emotionaler Inhalt im Ausgangssignal A im Vergleich zum unverarbeiteten Sprachsignal S nicht Wesentlich verändert ist.

Mittels des Steuer- und/oder Regelsignals R werden hierbei beispielsweise die Verstärkungen bei der Signalverarbeitung angepasst, wobei die Anpassungsstrategie im Wesentlich abhängig von den verwendeten Algorithmen zur Signalverarbeitung sind. Wie diese konkret verändert werden müssen, um das Vergleichsergebnis entsprechend zu reduzieren, kann beispielsweise durch entsprechende Versuche bestimmt werden. Der beschriebene Steuer- und/oder Regelmechanismus wird insbesondere bei einer klangtechnischen Optimierung des Hörgeräts verwendet.

Die beanspruchte Erfindung ist nicht auf die vorstehend beschriebenen Ausführungsbeispiele beschränkt. Vielmehr können auch andere Varianten der Erfindung von dem Fachmann hieraus im Rahmen der offenbarten Ansprüche abgeleitet werden, ohne den Gegenstand der beanspruchten Erfindung zu verlassen. Insbesondere sind ferner alle im Zusammenhang mit den verschiedenen Ausführungsbeispielen beschriebenen Einzelmerkmale im Rahmen der offenbarten Ansprüche auch auf andere Weise kombinierbar, ohne den Gegenstand der beanspruchten Erfindung zu verlassen.

In einer nicht dargestellten Ausführungsform ist es beispielsweise denkbar, dass die Signalverarbeitung der Signalverarbeitungseinheit 12 anhand des Vergleichsergebnisses $\gamma$ derart eingestellt wird, dass das mindestens ein emotionskorreliertes Merkmal $F_1$' bis $F_{18}$' im Ausgangssignal A verstärkt wird.

Bezugszeichenliste

| 2 | Hörgerät |
|---|---|
| 4 | Empfangseinheit |
| 6 | Eingangswandler |
| 8 | Spracherkennungseinheit |
| 10 | Controller |
| 12 | Signalverarbeitungseinheit |
| 14 | Merkmalsextraktor |
| 16 | Vergleichseinheit |
| 18 | Ausgabeeinheit |

| E | Eingangssignal |
|---|---|
| S | Sprachsignal |
| A | Ausgangssignal |
| $F_1, ..., F_{18}$ | Merkmale |
| $F_1', ..., F_{18}'$ | Merkmale |
| R | Steuer- und/oder Regelsignal |

**Patentansprüche**

1. Verfahren zum Betreiben eines Hörgeräts (2), aufweisend

   - eine Empfangseinheit (4) zum Empfangen von Sprachinformationen und Wandeln in ein Sprachsignal (S),
   - eine Signalverarbeitungseinheit (12) zur Signalverarbeitung des Sprachsignals (S) und Erzeugung eines Ausgangssignals (A), und
   - eine Ausgabeeinheit (18) zur Ausgabe eines Ausgangssignals (A) an einen Hörgerätenutzer,
   - wobei eine Sprachinformation in ein Sprachsignal (S) gewandelt wird,
   - wobei das Sprachsignal (S) durch die Signalverarbeitungseinheit (12) zu einem Ausgangssignal (A) zur Ausgabe an den Hörgerätenutzer verarbeitet wird,
   - wobei aus dem Sprachsignal (S) und dem Ausgangssignal (A) jeweils mindestens ein emotionskorreliertes Merkmal ($F_1, ..., F_{18}, F_1', ..., F_{18}'$) bestimmt wird,
   - wobei die aus dem Sprachsignal (S) und dem Ausgangssignal (A) bestimmten emotionskorrelierten Merkmale ($F_1, ..., F_{18}, F_1', ..., F_{18}'$) miteinander verglichen und ein Vergleichsergebnis bestimmt wird, und
   - wobei die Signalverarbeitungseinheit (12) in Abhängigkeit des Vergleichsergebnisses eingestellt wird.

2. Verfahren nach Anspruch 1,
   **dadurch gekennzeichnet,**
   **dass** das Vergleichsergebnis mit einem hinterlegten Schwellwert verglichen wird, und dass die Signalverarbeitungseinheit (12) in Abhängigkeit des Schwellwertvergleiches eingestellt wird.

3. Verfahren nach Anspruch 1 oder 2,
   **dadurch gekennzeichnet,**

- **dass** als Vergleichsergebnis eine Abweichung zwischen den emotionskorrelierten Merkmalen ($F_1$, ..., $F_{18}$) des Sprachsignals (S) und den emotionskorrelierten Merkmalen ($F_1$', ..., $F_{18}$') des Ausgangssignals (A) bestimmt wird, und
- **dass** die Signalverarbeitungseinheit (12) derart eingestellt wird, dass die Abweichung minimiert wird.

4. Verfahren nach einem der Ansprüche 1 bis 3,
**dadurch gekennzeichnet,**
**dass** die Signalverarbeitungseinheit (12) derart eingestellt wird, dass das mindestens eine emotionskorrelierte Merkmal ($F_1$', ..., $F_{18}$') im Ausgangssignal (A) verstärkt wird.

5. Verfahren nach einem der Ansprüche 1 bis 4,
**dadurch gekennzeichnet,**
**dass** als Vergleichsergebnis das Quadrat einer euklidischen Norm verwendet wird.

6. Hörgerät (2), aufweisend

- eine Empfangseinheit (4) zum Empfangen von Sprachinformationen und Wandeln in ein Sprachsignal (S),
- eine Signalverarbeitungseinheit (12) zur signaltechnischen Verarbeitung des Sprachsignals (S) und Erzeugung eines Ausgangssignals (A), und
- eine Ausgabeeinheit (18) zur Ausgabe eines Ausgangssignals (A) an einen Hörgerätenutzer,
- ein Merkmalsextraktor (14) zur Bestimmung jeweils mindestens eines emotionskorrelierten Merkmals ($F_1$, ..., $F_{18}$, $F_1$', ..., $F_{18}$') aus dem Sprachsignal (S) und aus dem Ausgangssignal (A),
- eine Vergleichseinheit (16) zum Vergleichen der aus dem Sprachsignal (S) und dem Ausgangssignal (A) bestimmten emotionskorrelierten Merkmale ($F_1$, ..., $F_{18}$, $F_1$', ..., $F_{18}$') zur Bestimmung eines Vergleichsergebnis, und
- einen Controller (10) zur Durchführung eines Verfahrens nach einem der Ansprüche 1 bis 5.

Figur

EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2021/306771 A1 (EL GUINDI NADIM [CH]) 30. September 2021 (2021-09-30) * das ganze Dokument * ----- | 1-6 | INV. H04R25/00 G10L21/02 |
| X | US 2022/295192 A1 (BOLDT JESPER BÜNSOW [DK]) 15. September 2022 (2022-09-15) * das ganze Dokument * ----- | 1-6 | ADD. G10L25/63 |
| X | US 2022/272465 A1 (BOLDT JESPER BÜNSOW [DK]) 25. August 2022 (2022-08-25) * das ganze Dokument * ----- | 1-6 | |
| A | EP 3 618 456 A1 (OTICON AS [DK]) 4. März 2020 (2020-03-04) * das ganze Dokument * ----- | 1-6 | |
| A | US 2023/016667 A1 (SROUR MAJD [IL] ET AL) 19. Januar 2023 (2023-01-19) * das ganze Dokument * ----- | 1-6 | |
| A | US 2020/120431 A1 (HANNEMANN RONNY [DE] ET AL) 16. April 2020 (2020-04-16) * das ganze Dokument * ----- | 1-6 | RECHERCHIERTE SACHGEBIETE (IPC) |
| A | EP 3 879 853 A1 (SONOVA AG [CH]) 15. September 2021 (2021-09-15) * das ganze Dokument * ----- | 1-6 | H04R G10L |
| A | DE 10 2009 043775 A1 (SIEMENS MEDICAL INSTR PTE LTD [SG]) 7. April 2011 (2011-04-07) * das ganze Dokument * ----- | 1-6 | |

Der vorliegende Recherchenbericht wurde für alle Patentansprüche erstellt

| Recherchenort | Abschlußdatum der Recherche | Prüfer |
|---|---|---|
| München | 2. September 2025 | Sucher, Ralph |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...............................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 25 16 5985

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-09-2025

| Im Recherchenbericht angeführtes Patentdokument | Datum der Veröffentlichung | Mitglied(er) der Patentfamilie | Datum der Veröffentlichung |
|---|---|---|---|
| US 2021306771 A1 | 30-09-2021 | KEINE | |
| US 2022295192 A1 | 15-09-2022 | CN 114830692 A | 29-07-2022 |
| | | EP 4078994 A1 | 26-10-2022 |
| | | US 2022295192 A1 | 15-09-2022 |
| | | US 2025234140 A1 | 17-07-2025 |
| | | WO 2021122082 A1 | 24-06-2021 |
| US 2022272465 A1 | 25-08-2022 | CN 114830691 A | 29-07-2022 |
| | | EP 4078995 A1 | 26-10-2022 |
| | | US 2022272465 A1 | 25-08-2022 |
| | | WO 2021122092 A1 | 24-06-2021 |
| EP 3618456 A1 | 04-03-2020 | KEINE | |
| US 2023016667 A1 | 19-01-2023 | EP 4076155 A1 | 26-10-2022 |
| | | US 2023016667 A1 | 19-01-2023 |
| | | WO 2021127228 A1 | 24-06-2021 |
| US 2020120431 A1 | 16-04-2020 | CN 111065032 A | 24-04-2020 |
| | | EP 3641344 A1 | 22-04-2020 |
| | | US 2020120431 A1 | 16-04-2020 |
| EP 3879853 A1 | 15-09-2021 | KEINE | |
| DE 102009043775 A1 | 07-04-2011 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **B. W. SCHULLER**. Speech emotion recognition: two decades in a nutshell, benchmarks and ongoing trends. *Communications oft he ACM*, vol. 61 (5), 90-99

- **F. EYBEN**. The Geneva Minimalistic Acoustic Parameter Set (GeMAPS) for Voice Research and Affective Computing. *IEEE Trans. Affective Computing*, July 2015, vol. 7 (2)